# EUROPEAN PATENT APPLICATION

(11) **EP 1 719 698 A1**
(43) Date of publication of application: **08.11.2006**
(21) Application number: 05256941.5
(22) Date of filing: 09.11.2005
(51) Int. Cl.: B64C 1/40, B32B 3/12

(54) **Thermally insulated structure-tapered joint**

(30) Priority: 05.05.2005 US 122905
(71) Applicant: Northrop Grumman Corporation, Los Angeles, CA 90067-2199 (US)
(72) Inventor: Bartley-Cho, Jonathan D., Arcadia, CA 91007 (US); Pousha, F. Donald, Brea, CA 92821 (US); Yasaki, Christopher M., Torrance, CA 90503 (US); Reynolds, Ross S., La Habra, CA 90631 (US)
(74) Representative: Pitchford, James Edward

(57) **Abstract**

Provided is a composite joint comprising a pair of adjoining composite panels (12) disposed in side-by-side arrangement and being generally aligned with one another. Each one of the composite panels has opposing inner and outer face sheets sandwiching a core panel therebetween and includes a ramp portion wherein the composite panel transitions into a reduced thickness solid laminate edge portion. The core panel includes a plurality of cells extending between the inner and outer face sheets. The cells within the ramp portions are substantially filled with a filler material. The cells adjacent to the ramp portions are substantially filled with aerogel. The composite joint further comprises a primary splice plate (30) extending across the solid laminate edge portions of the adjoining composite panels with mechanical fasteners (34) extending through the solid laminate edge portions and passing through the primary splice plate. A layer of themal barrier compound covers the primary splice plate.

## Description

### BACKGROUND OF THE INVENTION

The present invention relates generally to structural joints in composite structures and, more particularly, to a uniquely configured composite joint that is specifically adapted to minimize transfer of heat across the composite joint such as between an exterior of the composite structure and an interior thereof. The unique arrangement of the composite joint also provides for an effective sealing of the interior of the composite structure such as may be required in a fuel tank of an aircraft.

In many vehicles such as aircraft, the control of heat flow through certain structural areas is of critical importance in the design of the aircraft. More specifically, certain aircraft constructed of composite materials must be adapted to limit the flow of heat from an exterior of the aircraft to an interior thereof. Likewise, it is sometimes desirable to limit the flow of heat across a composite joint out of an interior portion of a composite structure. As is well known in the art, composite structures are typically comprised of composite panels which are constructed as inner and outer face sheet within which a core panel is sandwiched therebetween.

The composite face sheets may be fabricated of any fiber reinforced resin matrix such as fiberglass or graphite epoxy. Core panel materials are typically foam or honeycomb construction. It is also well known that many aircraft integrate fuel tanks into the wing structure. The ability to control or prevent the flow of excess heat into the fuel tanks is important for the overall integrity, performance and safety of the aircraft. Such heat may be generated due to aerodynamic friction as well as due to radiation as may be generated by the sunlight on the aircraft's wing surfaces.

Heat generated by aerodynamic friction on outer surfaces of joint areas of the aircraft may be somewhat mitigated by the use of countersunk fasteners. More specifically, it is common in the industry to employ mechanical fasteners having countersunk heads in joint areas to minimize the amount of aerodynamic drag that would otherwise be collected by protruding fastener heads. However, because most mechanical fasteners include a shank which extends from the exterior to the interior of the aircraft structure, the mechanical fastener provides a path by which thermal heat may readily pass into the interior.

The control of heat flow through non-joint areas of the composite structures may be more easily controlled. For example, thermal conductivity from the outer face sheet toward the inner face sheet may be controlled by reducing the radiative or conductive heat transfer through the core panel: For core panels made of closed cell foams, conductive heat transfer is made difficult due to the large number of small cells that the heat must cross in traveling from one face sheet to another face sheet, such as from an outer face sheet to an inner face sheet. For honeycomb core panels, both radiative and conductive heat transfer between the outer face sheet and the inner face sheet is much easier as most honeycomb cores include hollow cells which provide a direct path for heat flow. Moreover, cell walls of honeycomb core panels provide a direct conductive heat path from the outer face sheet to the inner face sheet.

Control of heat flow in joint areas is more difficult due to the heat path provided by mechanical fasteners. In such joint areas, heat conduction from the outer surface to the inner surface is a function of the cross sectional area of the shank of the mechanical fasteners. Unfortunately, because most mechanical fasteners are typically formed of highly conductive materials such as metallic material, heat is easily conducted through the shank. One attempt to minimize the amount of heat that transfers through the shanks of mechanical fasteners is to minimize the quantity of fasteners that are utilized in joint areas. Unfortunately, a certain amount of fasteners are required in order to adequately transfer structural loads.

Furthermore, many aircraft typically include removable access panels or doors which allow for inspection and or access to certain internal portions of the aircraft structure. For example, fuel tanks in some aircraft may include removable panels that to allow for inspection of interior portions of the fuel tank. For such access panels, a plurality of mechanical fasteners are typically provided around the perimeter of the access panel. Unfortunately, heat is easily conducted through the shanks of such mechanical fasteners. The control of such heat flow to the fuel tank is of critical importance.

As can be seen, there exists a need in the art for a composite joint wherein the conduction of heat through the shank of the mechanical fasteners to the interior of the structure is minimized. Furthermore, there exists a need in the art for a composite joint that allows for effective sealing in the interior of the composite joint such that fluids may be effectively contained. In addition, there exists a need in the art for a composite joint that provides for effective sealing under dynamic structural loading of the composite joint such as may be caused by aerodynamic forces. Finally, there exists a need in the art for a composite joint that is of simple construction in order to simplify manufacturability, installation and maintenance.

### BRIEF SUMMARY OF THE INVENTION

The present invention specifically addresses the above-referenced needs associated with composite joints. More specifically, the present invention is a composite joint which is configured to minimize heat conduction between an exterior and an interior thereof. In this regard, the composite joint of the present invention may be configured to limit heat conduction in a specified direction across the composite joint. For example, the composite joint may be configured to limit heat conduction in a direction from the interior to the exterior of the composite joint such as may be desirable, for example, in retaining heat within a hot water tank located within a wing structure. Likewise, the composite joint may be configured to limit heat conduction along a direction from external wing surfaces to the interior of the composite joint such as may be desirable, for example, in preventing heat buildup in a fuel tank located in the wing structure.

The present invention may be configured as a composite joint and/or as a composite structure. The composite joint comprises a pair of adjoining composite panels and a primary splice plate. The primary splice plate is configured to connect the composite panels using at least one mechanical fastener extending through each of the composite panels and through the primary splice plate. Importantly, the composite joint includes a layer of thermal barrier compound covering the primary splice plate. The thermal barrier compound may also extend beyond the primary splice plate and may partially overlap the inner face sheets of the adjoining composite panels.

The present invention may further be configured as a composite structure wherein a continuous, uninterrupted section of a composite panel may include a portion wherein the composite panel is thinned down to a solid laminate section. A vertical web may be extended laterally inwardly from the solid laminate section for load distribution purposes and/or for partitioning an internal area defined by the composite structure. For purposes of the following discussion, the arrangement of the composite structure of the present invention is substantially similar to the arrangement of the composite joint of the present invention with the main difference being that the composite joint includes two adjoining composite panels whereas the composite structure includes a single one of the composite panels.

In the composite joint, each of the composite panels includes opposing inner and outer face sheets sandwiching a core panel therebetween. The inner and outer face sheets may be constructed of a fiber reinforced matrix material such as fiberglass or graphite epoxy although any suitable material may be used. The core panel may be constructed of honeycomb material which typically has a plurality of aligned hexagonally cross-sectional shaped cells that extend from the inner face sheet to the outer face sheet. The honeycomb may be formed of aramid paper so as to have a reduced heat conducting capability although any material may be used.

The composite joint comprises the composite panels which are generally aligned with one another with each one of the composite panels having a generally constant thickness portion. Each of the composite panels also has a ramp portion along which the inner face sheet tapers inwardly toward the outer face sheet such that the constant thickness section portion transitions into a reduced thickness solid laminate edge portion comprising only the inner and outer face sheets stacked on top of one another.

The cells within the constant thickness portions of the core panel may be at least partially filled with aerogel in order to reduce heat transfer. The cells within the ramp portions are preferably filled with a filler material such as aerogel and/or thermal barrier compound and/or potting compound to also prevent heat transfer between the outer face sheet(s) and the inner face sheet(s). The composite joint has at least one primary splice plate which extends across the solid laminate edge portions of the adjoining composite panels. At least one secondary splice plate may be included with the composite joint and which is sized and configured to be complimentary to the primary splice plate. The primary splice plate is preferably sandwiched between the solid laminate edge portions and a secondary splice plate.

The composite joint may include a vertical web which extends laterally inwardly from the solid laminate edge portions and may have opposing web faces such that the thermal barrier compound may extend from the primary splice plate into the web faces. The thermal barrier compound may have a layer which is formed at a thickness of about 0.1 inches although the thermal barrier compound may be provided in any thickness thereacross. The thermal barrier compound layer may extend across the solid laminate edge portions and across the ramp portions.

The composite joint comprises at least one mechanical fastener on each side thereof which extends through the solid laminate edge portion of each composite panel and which passes through the secondary and primary splice plates. Each one of the mechanical fasteners has a shank which provides the path for thermal transfer between the face sheets. The mechanical fasteners may be screws that are extended into the composite joint and which terminate in a fastener receiver such as a dome nut which is disposed against the secondary splice plate..

The composite joint also comprises the layer of thermal barrier compound which covers the primary splice plate and the fastener receivers so as to inhibit thermal conduction of heat from through the shank of the mechanical fasteners and into the interior. The layer of thermal barrier compound may extend slightly beyond the edges of the primary and/or secondary splice plates. The thermal barrier compound may be provided at a greatly increased thickness relative to the height of the fastener receivers and may also be extended downwardly along the web faces of the vertical web so as to provide further thermal resistance. The composite joint may include a contiguous coating of sealant, such as a polysulfide sealant, that is distributed over the thermal barrier compound layer as well along the inner face sheets for fluid-tight applications such as fuel tanks.

### BRIEF DESCRIPTION OF THE DRAWINGS

These as well as other features of the present invention will become more apparent upon reference to the drawings wherein:

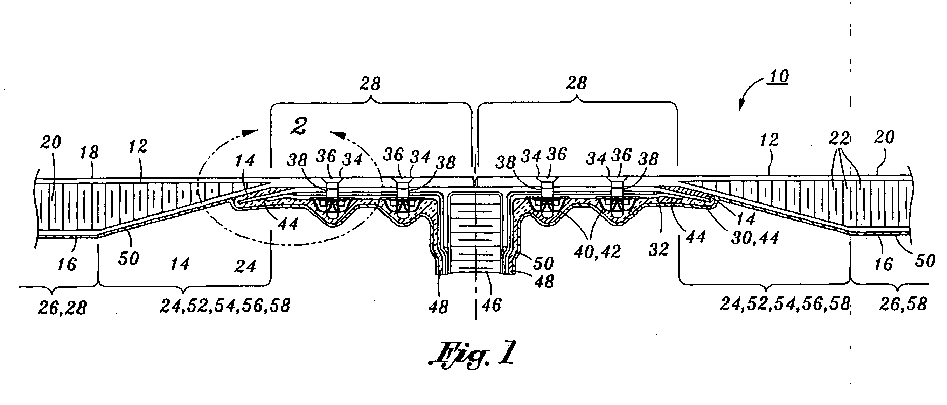

Figure 1 is a cross sectional view of a composite joint of the present invention in one embodiment and illustrating a pair of adjoining composite panels interconnected by mechanical fasteners extending through a primary splice plate and having a layer of thermal barrier compound disposed thereon;
Figure 1a is a cross sectional view of a composite structure in a further embodiment of the present invention and illustrating a composite panel interconnected to a vertical web and having mechanical fasteners extending through a primary splice plate with a layer of thermal barrier compound disposed thereon;

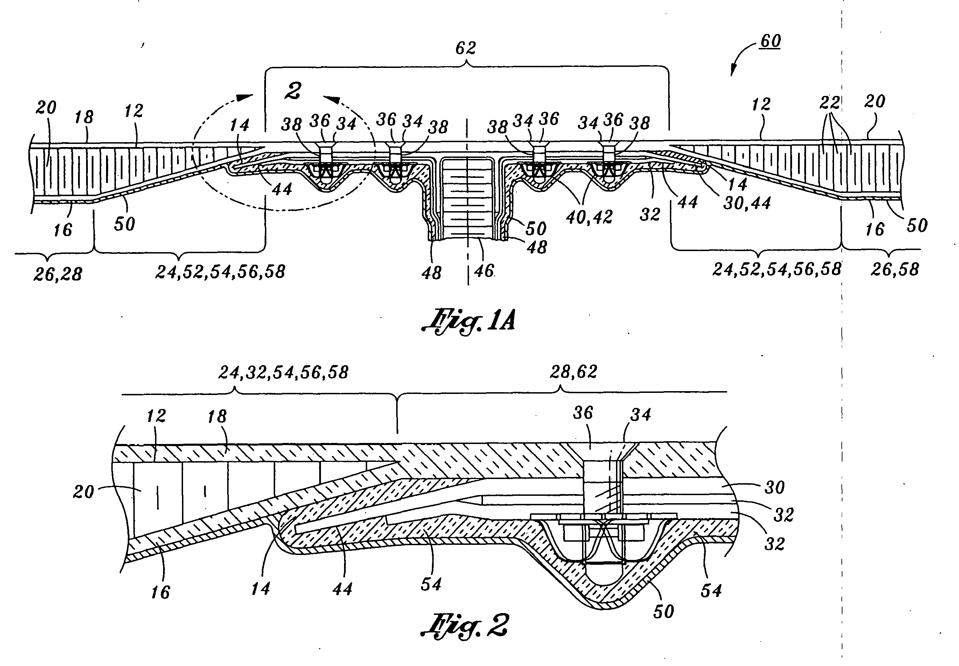

Figure 2 is an enlarged partial cross sectional view of a portion of the composite joint taken along line 2-2 of Fig. 1 and illustrating a gap formed between angled edges of the primary splice plate and an inner face sheet of one of the composite panels;

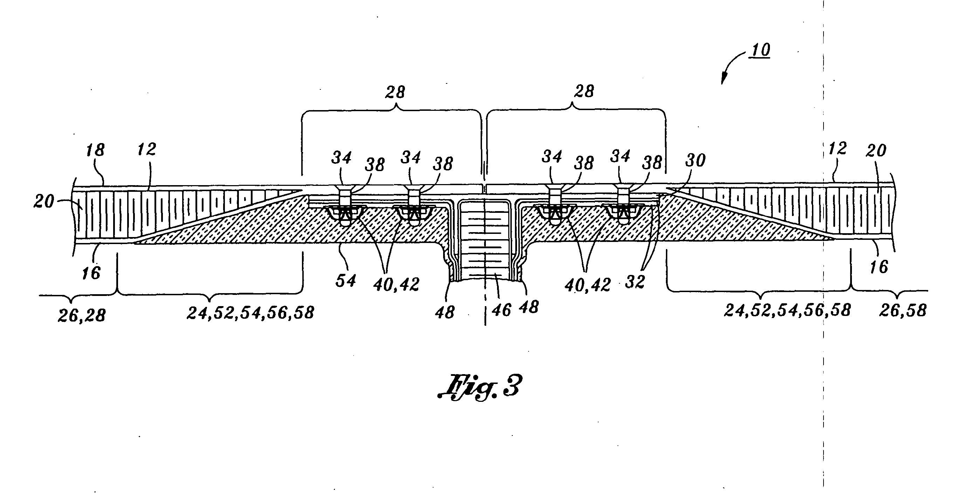

Figure 3 is a cross sectional view of the composite joint in a further embodiment illustrating the thermal barrier compound being installed at a thickness such that the thermal barrier compound is substantially flush with inner face sheets of the composite panels;

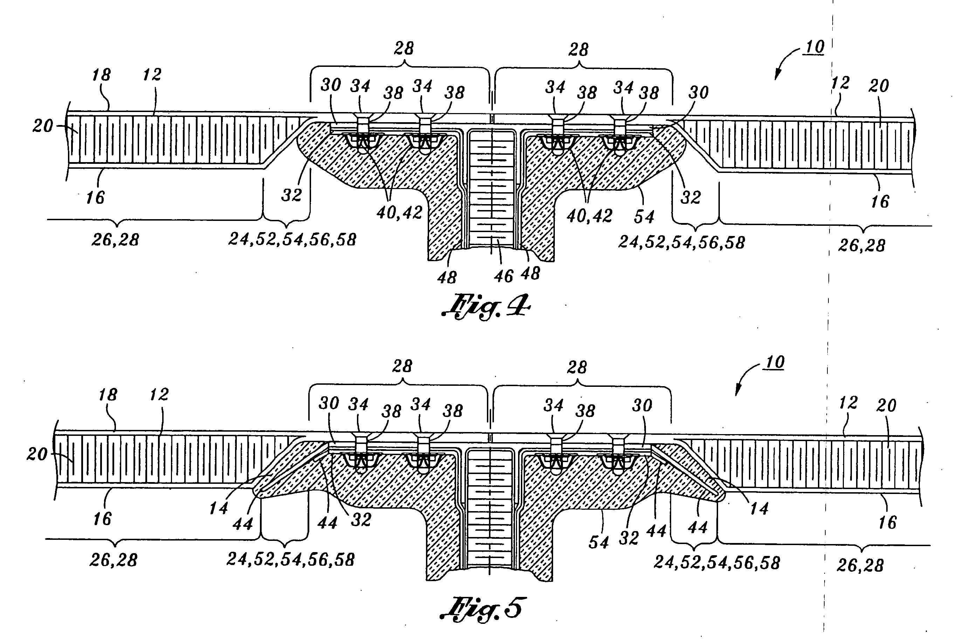

Figure 4 is a cross sectional view of the composite joint in an even further embodiment wherein the composite joint includes a vertical web which extends laterally inwardly from the inner face sheets of the adjoining composite panels and further illustrating the thermal barrier compound covering the opposing web faces of the vertical web; and
Figure 5 is a cross sectional view of the composite joint in an even further embodiment illustrating the primary splice plate having angled edges that are upturned and disposed in spaced relation to ramp portions of the adjoining composite panels and further illustrating thermal barrier material installed in a gap between the ramp portions and the angled edges of the primary splice plate.

### DETAILED DESCRIPTION OF THE INVENTION

Referring now to the drawings wherein the showings are for purposes of illustrating the present invention and not for purposes of limiting the same, provided is a composite joint 10 which is specifically adapted to minimize heat conduction between an exterior of the composite joint 10 to an interior thereof.

It should be noted that the present invention may be configured as a composite joint as shown in Fig. 1 or as a composite structure as shown in Fig. 1a. The composite joint shown in Fig. 1 comprises-a pair of adjoining composite panels and a primary splice plate. The primary splice plate is configured to connect the composite panels with at least one mechanical fastener extending through each of the composite panels and through the primary splice plate. Importantly, the composite joint includes a layer of thermal barrier compound covering the primary splice plate. The thermal barrier compound may also extend beyond the primary splice plate and may partially overlap the inner face sheets of the adjoining composite panels.

The present invention may further be configured as the composite structure shown in Fig. 1a wherein a continuous, uninterrupted section of a composite panel may include an area wherein the composite panel is thinned down to a solid laminate section. A vertical web may be extended laterally inwardly from the solid laminate section for load distribution purposes and/or for partitioning an internal area defined by the composite structure. For purposes of the following discussion, the arrangement of the composite structure of the present invention is substantially similar to the arrangement of the composite joint of the present invention with the main difference being that the composite joint includes two adjoining composite panels whereas the composite structure includes only a single one of the composite panels.

Referring first to Fig. 1, the composite joint 10 comprises, in its broadest sense, a pair of adjoining composite panels 12, a primary splice plate 30, at least one mechanical fastener 34 extending through each of the composite panels 12 and the primary splice plate 30, and a layer of thermal barrier compound 54 covering the primary splice plate 30. As shown in Figures 1 and 2-5, each of the composite panels 12 includes at least one inner face sheet 16 and at least one outer face sheet 18 sandwiching a core panel 20 therebetween. As is well known in the art of composite construction, the inner and outer face sheets 16, 18 are typically constructed of a fiber reinforced matrix material such as fiberglass or graphite epoxy. In this regard, the inner and outer face sheets 16, 18 may be constructed of any material and is not necessarily limited to a fiber reinforced resin material but may be fabricated of metallic material, a polymeric material or any material suitable for the application. Furthermore, the inner and outer face sheets 16, 18 may be comprised of multiple layers of inner and outer face sheets 16, 18, respectively.

The core panel 20 may be constructed of any material having suitable mechanical properties such as suitable strength and stiffness characteristics for the given application. For the composite joint 10 of the present invention, it is contemplated that the core panels 20 are constructed generally of honeycomb material which, as is well known in the art, typically comprises a sheet of material having cells 22 with a hexagonal cross-sectional shape and which are generally elongate and hollow and generally extend from the inner face sheet 16 to the outer face sheet 18. Furthermore, the cells 22 of the honeycomb are typically oriented to be generally orthogonal relative to the inner and outer face sheets 16, 18 although other orientations are contemplated.

It is contemplated that the honeycomb is formed of aramid paper so as to have a reduced heat conducting capability. However, it is noted that the honeycomb may be formed of any material including metallic material and/or polymeric material. However, due to the relatively high heat conducting capability of metallic materials, it is contemplated that aramid paper is preferred for the honeycomb. The aramid paper may be an aramid fiber paper that is saturated with resin in order to produce a cell 22 structure having improved mechanical properties for the core panel 20. In addition, such aramid fiber paper advantageously provides reduced thermal conductivity properties which are more suitable for the present invention.

Referring still to Figure 1, the composite joint 10 comprises the composite panels 12 which are adjoined in side-by-side arrangement and are generally aligned with one another and which may be placed in abutting contact or with a slight gap therebetween. As can be seen, each one of the composite panels 12 may have a generally constant thickness portion 26. Furthermore, each of the composite panels 12 may have a ramp portion 24 along which the inner face sheet 16 tapers inwardly toward the outer face sheet 18. In this section, the core panel 20 is shaped complimentary to the ramp portion 24 such that the core panel 20 defines a wedge shape therewithin. The ramp portion 24 of each one of the composite panels 12 allows the inner face sheet 16 to taper toward the outer face sheet 18 such that the constant thickness section portion generally transitions into a reduced thickness solid laminate edge portion 28 comprising only the inner and outer face sheets 16, 18 stacked against one another. As can be seen, it is the solid laminate edge portions 28 which are arranged side-by-side to one another and through which the mechanical fasteners 34 extend so as to provide the composite joint 10.

In order to prevent heat conduction in the generally constant thickness portions 26 of the composite panels 12, the cells 22 within the core panels 20 may be at least partially and, more preferably, substantially filled with aerogel 58 in order to prevent heat convection and radiation and to reduce heat conduction thereacross. However, the cells 22 within the ramp portions 24 are preferably substantially filled with a filler material 52 such as aerogel 58 and/or thermal barrier compound 54 and/or potting compound 56. Importantly, the filler material 52 within the cells 22 in the ramp portions 24 prevents heat convection and radiation and reduces heat conduction from the outer face sheets 18 to the inner face sheets 16. In this manner, untoward thermal buildup is prevented within the inner structure of the composite joint 10.

The aerogel 58 which may be used in the cell 22 of the ramp portions 24 is a well known material in the art and is utilized frequently in the aerospace industry. Aerogel 58 is a generally highly porous material which may be comprised of silicon and/or metal oxides and which has an extremely low density, but which also has an extremely high internal surface area. For this reason, aerogel 58 has an extremely high load carrying capability which makes it ideal as a lightweight structural material for composites. Advantageously, the extremely high internal surface area of aerogel 58 also makes it ideal as a thermal barrier material. As was earlier mentioned, the aerogel 58 as used in the present invention may be a silica aerogel although other aerogels such as metal oxide aerogel may be used.

The filler material 52 may alternatively be a thermal barrier compound 54 and, in this regard, the thermal barrier compound 54 may be any compound having heat insulating characteristics. A preferred thermal barrier compound 54, however, is one that is commonly referred to as FASTBLOCK, manufactured by Kirkhill-TA Company, Brea, California. FASTBLOCK utilizes a silicon based elastomer which also contains ceramic precursors that transition into thermally resistant ceramic material when exposed to high heat. Due to this construction, the FASTBLOCK provides a stiff, low density coating which, upon exposure to extreme temperatures, becomes ceramic in order to reduce heat transfer therethrough. The thermal barrier compound 54 may alternatively be comprised of any silicon based ablative material or any other material that prevents high heat flux. However, FASTBLOCK may be a preferred thermal barrier compound 54 and more particularly, FASTBLOCK-800F may be a most preferred alternative in the family of FASTBLOCK products due to its viscous consistency which may enhance its application into the compound joint.

Another preferred filler material 52 may be a potting compound 56 such as an epoxy microballoon matrix material. However, for the particular application described herein, it is contemplated that resin may be a better candidate as the potting compound 56. In this regard, thermoset bismaleimide resin (BMI) may be a most preferred resin for the potting compound 56. Other materials from which the thermal barrier compound 54 may be comprised include Nanogel, TEEK foam, polyurethane foam, polyvinylchloride (PVC) foam and Rohacell foam. Nanogel, manufactured by Nanogel-Cabot Corporation, Alpharetta, Georgia, is a hydrophobic silica aerogel 58 which has nano-sized pores. Such fine pore structure of Nanogel provides superior thermal protection for the application described herein. TEEK Foam is a polyimide foam that is commercially known as SOLREX and is available from Sordal of Holland, Michigan. TEEK Foam is a very low density, closed cell which retains its structural integrity under extreme temperatures. Such TEEK Foam may be directly installed on a structural system or injected into the cells 22 of honeycomb core panel 20.

Polyurethane foam may also be used for filling cells 22 of the honeycomb core panel 20. Likewise, Airex, a PVC foam manufactured by Alcan Baltek Corporation, Northvale, New Jersey is a lightweight closed cell foam that also offers excellent thermal resistance at elevated temperatures and which exhibits high stiffness and strength characteristics for its low weight. Rohacell is a polymethacrylimide foam that is a closed cell rigid foam which also exhibits favorable thermal resistance at elevated temperatures. Regardless of the type of filler material 52 chosen to fill the cells 22 in the ramp portions 24 of the composite panels 12, the filler material 52 preferably has favorable thermal resistance properties which are maintainable at elevated temperatures.

Referring still to Figure 1, shown in the composite joint 10 is at least one primary splice plate 30 in each of the embodiments although multiple primary splice plates 30 may be used. The primary splice plate 30 extends generally across the solid laminate edge portions 28 of the adjoining composite panels 12. Although each of the embodiments illustrated in the figures shows a vertical web 46 extending inwardly from the solid laminate edge portions 28, it is contemplated that the composite joint 10 may be arranged such that the vertical web 46 is omitted and the primary splice plate 30 extends across the solid laminate edge portions 28 and does not engage the vertical web 46.

In order to improve the strength carrying capability and the stiffness of the composite joint 10, it is contemplated that at least one secondary splice plate 32 may be included with the composite joint 10. Preferably, the secondary splice plate 32 is sized and configured to be complimentary to the primary splice plate 30. In this regard, the secondary splice plate 32 is sized to be generally equivalent in dimensional characteristics to the primary splice plate 30. As shown in each of the figures, the primary splice plate 30 is preferably sandwiched between the solid laminate edge portions 28 and a secondary splice plate 32 although it is contemplated that the primary splice plate 30 may be the outermost one in the composite joint 10.

As can be seen in the figures, the primary splice plate 30 has opposing angled edges 44. As shown in Figures 1 and 5, the angled edges 44 of the primary splice plate 30 may be oriented generally parallel to the angle of the ramp portion 24. However, as is shown in Figure 5, the angled edge 44 of the primary splice plate 30 may be oriented at an angle that is non-parallel to the ramp portions 24. In addition, it should be noted in Figures 1 and 5 that the angled edges 44 of the primary splice plate 30 are oriented so as to be in spaced relation with the ramp portion 24 such as to define a gap 14 between the primary splice plate 30 angled edges 44 and the ramp portions 24.

Importantly, a thermal barrier compound 54 is at least injected into or disposed so as to at least partially fill the gap 14 in order to provide improved thermal resistance thereacross. The angled edges 44 may provide a spring-back effect during deflections of the composite panel 12 in loads on the composite joint 10. In this regard, the thermal barrier compound 54 filling the gap 14 may provide thermal resistance to heat transfer during deflections that may normal occur during flight as a result of aerodynamic loading.

As is shown in Figures 1 and 4, the angled edges 44 have free edges that may be tapered in thickness as compared to a thickness of interior portions of the primary splice plate 30. However, it should be noted that the thickness of the primary splice plate 30 may be varied in any manner thereacross. As shown in Figures 1-5, the secondary splice plate 32 may be comprised of a stack of secondary splice plates 32 wherein an outermost one of the secondary splice plates 32 may have opposing angled edges 44 that are disposed in generally abutting surface contact with the angled edges 44 of the primary splice plate 30. In embodiments comprising the stack of secondary splice plates 32, the inner ones of the secondary splice plates 32 are preferably sandwiched between the primary splice plate 30 and the outermost one of the secondary splice plate 32.

The angled edges 44 of the secondary splice plate 32, and more particularly, the outermost one of the secondary splice plates 32, may extend only partially along the width of the angled edge 44 of the primary splice plates 30. However, the angled edges 44 of the secondary splice plate 32 may be extended to be equal in width to the angled edges 44 of the primary splice plate 30. As shown in Figure 5, the inner ones of the primary splice plate 30 may also have angled edges 44 that are formed to be in abutting surface contact with and sandwiched between the angled edges 44 of the primary splice plate 30 and outermost one of the secondary splice plates 32. As can be seen, the composite joint 10 may be configured to provide any number of secondary splice plates 32 and/or any number of primary splice plates 30 and may include or omit the angled edges 44 on any one of these components.

As was earlier mentioned, the composite joint 10 may include a vertical web 46 which extends laterally inwardly from the inner face sheets 16 of the solid laminate edge portions 28 of the adjoining composite panels 12. The vertical web 46 may have opposing web faces 48 such that the thermal barrier compound 54 may extend from the primary splice plate 30 along the web faces 48 of the vertical web 46 to provide improved thermal resistance. In an embodiment as shown in Figure 1, it is contemplated that the thermal barrier compound 54 may have a layer which is formed at a thickness of about 0.1 inches although the thermal barrier compound 54 may be provided in any thickness thereacross.

For example, as is shown in Figure 2, the thermal barrier compound 54 layer may extend across the solid laminate edge portions 28 and across the ramp portions 24 up to the constant thickness portions 26 of each of the adjoining composite panels 12. In this regard, the thermal barrier compound 54 layer may be formed so as to be substantially flush with the inner face sheets 16 of the constant thickness portions 26 of the adjoining composite panels 12. However, as will be described in greater detail below, the thermal barrier compound 54 layer may be provided in any thickness and in any configuration or shape so as to provide the desired thermal resistance characteristics for the composite joint 10.

Referring still to Figures 1 and 2-5, the composite joint 10 comprises at least one mechanical fastener 34 on each side thereof which extends through the solid laminate edge portion 28 of each composite panel 12 and which passes through the primary splice plate 30. If the composite joint 10 includes multiple ones of the primary splice plate 30 and multiple ones of the secondary splice plates 32, it is contemplated that the mechanical fastener 34 will likewise extend therethrough. As shown in Figures 1-5, each one of the mechanical fasteners 34 has a shank 38 which provides the path for thermal conductivity from the outer face sheets 16, 18 to the inner face sheets 16.

As was earlier mentioned, each one of the mechanical fasteners 34 preferably has a fastener head 36 that is countersunk into the outer face sheets 18 in order to reduce the amount of heat generated through aerodynamic friction which may be transferred through the shank 38 of the mechanical fastener 34. It is contemplated that the mechanical fasteners 34 may be configured as titanium fasteners. In this regard, the mechanical fasteners 34 may be screws that are extended into the composite joint 10. As shown in the figures, each one of the mechanical fasteners 34 preferably terminates in a fastener receiver 40 which is preferably disposed against the secondary splice plate 32. It is contemplated that the fastener receiver 40 may be a dome nut 42 which is configured as a nut plate that is permanently attached to the outermost one of the secondary splice plates 32. However, the fastener receiver 40 may be any suitable receiver for the mechanical fastener 34.

Importantly, the composite joint 10 also comprises the layer of thermal barrier compound 54 which covers the primary splice plate 30 and the fastener receivers 40 so as to inhibit thermal conduction of heat from through the shank 38 of the mechanical fasteners 34 and into the interior. As was earlier mentioned, the layer of thermal barrier compound 54 preferably covers the fastener receivers 40 and additionally extends at least slightly beyond the edges, such as the angled edges 44, of the primary and/or secondary splice plates 30, 32. Furthermore, the layer of thermal barrier compound 54 is preferably at least partially inserted into the gap 14 which may be formed between the angled edges 44 and the ramp portions 24.

As shown in Figures 4 and 5, the thermal barrier compound 54 may be provided at a greatly increased thickness relative to the height of the fastener receivers 40 mounted against the secondary splice plates 32. Furthermore, the thermal barrier compound 54 is extended downwardly along the web faces 48 of the vertical web 46 so as to provide further thermal resistance. Likewise, the thermal barrier compound 54 as shown in Figure 5 illustrates the at least partial filling of the gap 14 so as to provide thermal resistance between the inner face sheet 16 and the angled edges 44 of the primary splice plate 30.

It is contemplated that the thermal barrier compound 54 may be installed as a paste or as preformed blocks which are glued or otherwise adhered to the primary splice plate 30. If provided in paste form, it is contemplated that the thermal barrier compound 54 may be troweled onto the primary splice plate 30 and over the fastener receivers 40 at the desired thickness as well as to be inserted into the gap 14 between the angled edges 44 and the ramp portions 24. Likewise, the paste of the thermal barrier compound 54 may be troweled along the web faces 48 of the vertical web 46 so as to provide a continuous layer of thermal barrier compound 54 between the primary splice plate 30 and the vertical web 46.

If provided as preformed blocks, it is contemplated that the thermal barrier compound 54 may be installed by adhering the preformed blocks to the primary splice plate 30 and/or the web faces 48. Likewise, preformed blocks of the thermal barrier compound 54 may be installed against the ramp portions 24 within the gap 14 between the angled edges 44 and the ramp portions 24. In this manner, the thermal barrier compound 54 may be provided in any thickness and may be installed in any manner so as to provide the requisite amount of thermal resistance to prevent conduction of heat into the interior of the composite joint 10.

The composite joint 10 may optionally include a contiguous coating of sealant distributed over the thermal barrier compound 54 layer as well over the inner face sheets 16 for fluid-tight applications such as fuel tanks. Such sealant coating may comprise a polysulfide sealant 50 that is compatible with most fuels and which advantageously maintains its flexibility after curing. Optionally, such sealant coating may include microballoons therewithin in order to reduce overall density and thereby minimize weight.

Referring briefly to Fig. 1a, as was earlier mentioned, the present invention may be configured as the composite structure including a continuous, uninterrupted section of composite panel which may include an area wherein the composite panel is thinned down to a solid laminate section. As shown in Fig. 1a, the vertical web may optionally be extended laterally inwardly from the solid laminate section such as for load distribution purposes and/or for partitioning an internal area defined by the composite structure. However, the arrangement of the composite structure of the present invention is substantially similar to the arrangement of the composite joint of the present invention with the maindifference being that the composite joint includes two adjoining composite panels whereas the composite structure includes only a single one of the composite panels.

Referring to Fig. 1a, the composite structure includes the composite panel which has the generally constant thickness portion with opposing inner and outer face sheets sandwiching a core panel therebetween. The composite panel also includes a pair of ramp portions along which the inner face sheet tapers inwardly toward the outer face sheet such that the constant thickness portion transitions into a reduced thickness solid laminate section. As was described above for the composite joint, the composite panel of the composite structure includes the constant thickness portion and ramp portions which each include the plurality of cells extending between the inner and outer face sheets. As was also earlier mentioned, the cells within the ramp portions are substantially filled with a filler material while the cells within the constant thickness portion are substantially filled with aerogel. The arrangements of the thermal barrier compound as well as the materials that may be used in the composite structure are identical to that described above for the composite joint.

Additional modifications and improvements of the present invention may also be apparent to those of ordinary skill in the art. Thus, the particular combination of parts described and illustrated herein is intended to represent only certain embodiments of the present invention, and is not intended to serve as limitations of alternative devices within the spirit and scope of the invention.

## Claims

1. A composite structure, comprising:
a composite panel having a generally constant thickness portion with opposing inner and outer face sheets sandwiching a core panel therebetween, the composite panel including a pair of ramp portions along which the inner face sheet tapers inwardly toward the outer face sheet such that the constant thickness portion transitions into a reduced thickness solid laminate section, the constant thickness portion and ramp portions including a plurality of cells extending between the inner and outer face sheets, the cells within the ramp portions being substantially filled with a filler material, the cells within the constant thickness portion being substantially filled with aerogel;
a primary splice plate extending across the solid laminate section;
at least one mechanical fastener extending through the solid laminate section and passing through the primary splice plate; and
a layer of themal barrier compound at least partially covering the primary splice plate and the mechanical fastener.

2. The composite structure of Claim 1 further comprising:
a vertical web extending laterally inwardly from the solid laminate section, the vertical web having opposing web faces;
wherein the layer of themal barrier compound extends along the opposing web faces.

3. The composite joint of Claim 1 wherein:
each one the mechanical fasteners terminates in a fastener receiver disposed against the primary splice plate;
the layer of themal barrier compound covering the fastener receivers.

4. The composite structure of Claim 1 further comprising:
at least one secondary splice plate sized and configured to be complementary to the primary splice plate;
wherein the primary splice plate is sandwiched between the solid laminate section and the secondary splice plate;
the mechanical fastener extending through the solid laminate section and passing through the primary and secondary splice plates.

5. The composite structure of Claim 1 wherein the filler material is one of aerogel and thermal barrier compound and potting compound.

6. The composite structure of Claim 5 wherein:
the aerogel is a silica aerogel;
the thermal barrier compound is a silicone-based elastomer; and
the potting compound is an epoxy/microballoon material.

7. The composite structure of Claim 1 wherein:
the core panel is formed of honeycomb;
each one of the cells being configured as an elongate hollow cell having a hexagonal cross section and being oriented generally orthogonally relative to the inner and outer face sheets.

8. The composite structure of Claim 7 wherein the honeycomb is formed of aramid paper.

9. The composite structure of Claim 1 wherein the inner and outer face sheets are formed of graphite/epoxy material.

10. The composite structure of Claim 1 wherein:
the primary splice plate has opposing angled edges;
each one of the angled edges being disposed in generally parallel and spaced relation to a respective one of the ramp portions and defining a gap between each one of the angled edges and the ramp portions;
the thermal barrier compound at least partially filling at least one of the gaps.

11. A composite joint, comprising:
a pair of adjoining composite panels disposed in side-by-side arrangement and being generally aligned with one another, each one of the composite panels having a generally constant thickness portion with opposing inner and outer face sheets sandwiching a core panel therebetween and including a ramp portion along which the inner face sheet tapers inwardly toward the outer face sheet such that the constant thickness portion transitions into a reduced thickness solid laminate edge portion, the core panel including a plurality of cells extending between the inner and outer face sheets, the cells within the ramp portions being substantially filled with a filler material, the cells within the constant thickness portion being substantially filled with aerogel;
a primary splice plate extending across the solid laminate edge portions of the adjoining composite panels;
at least one mechanical fastener extending through the solid laminate edge portions of each composite panel and passing through the primary splice plate; and
a layer of themal barrier compound covering the primary splice plate.

12. The composite joint of Claim 11 further comprising:
at least one secondary splice plate sized and configured to be complementary to the primary splice plate;
wherein the primary splice plate is sandwiched between the solid laminate edge portions and the secondary splice plate;
the mechanical fastener extending through the solid laminate edge portions of each composite panel and passing through the primary and secondary splice plates.

13. The composite joint of Claim 11 wherein the filler material is one of aerogel and thermal barrier compound and potting compound.

14. The composite joint of Claim 13 wherein:
the aerogel is a silica aerogel;
the thermal barrier compound is a silicone-based elastomer; and
the potting compound is an epoxy/microballoon material.

15. The composite joint of Claim 11 wherein:
each one the mechanical fasteners terminates in a fastener receiver disposed against the secondary splice plate;
the layer of themal barrier compound covering the fastener receivers.

16. The composite joint of Claim 11 wherein:
the core panel is formed of honeycomb;
each one of the cells being configured as an elongate hollow cell having a hexagonal cross section and being oriented generally orthogonally relative to the inner and outer face sheets.

17. The composite joint of Claim 16 wherein the honeycomb is formed of aramid paper.

18. The composite joint of Claim 11 wherein the inner and outer face sheets are formed of graphite/epoxy material.

19. The composite joint of Claim 11 wherein:
the primary splice plate has opposing angled edges;
each one of the angled edges being disposed in generally parallel and spaced relation to a respective one of the ramp portions and defining a gap between each one of the angled edges and the ramp portions;
the thermal barrier compound at least partially filling at least one of the gaps.

20. The composite joint of Claim 11 wherein:
the thermal barrier compound layer extends across the solid laminate edge portions and the ramp portions to the constant thickness portions of the adjoining composite panels;
the thermal barrier compound layer being formed to be substantially flush with the inner face sheets of the constant thickness portions.

21. The composite joint of Claim 11 further comprising:
a vertical web extending laterally inwardly from the solid laminate edge portions of the adjoining composite panels, the vertical web having opposing web faces;
wherein the layer of themal barrier compound extends along the opposing web faces.
